# EUROPÄISCHE PATENTSCHRIFT

(11) **EP 3 421 288 B1**
(45) Veröffentlichungstag und Bekanntmachung des Hinweises auf die Patenterteilung: **24.03.2021**
(21) Anmeldenummer: 18172604.3
(22) Anmeldetag: 16.05.2018
(51) Int. Cl.: B60L 50/50, B60L 53/31, H02J 50/10, H02J 50/90, B60L 53/126, H02J 7/00, H01F 38/14, H04B 5/00

(54) **LADESYSTEM FÜR EIN BATTERIEBETRIEBENES FLURFÖRDERZEUG SOWIE VERFAHREN ZUM INDUKTIVEN LADEN EINES BATTERIEBETRIEBENEN FLURFÖRDERZEUGS**
CHARGING SYSTEM FOR A BATTERY-OPERATED INDUSTRIAL TRUCK AND METHOD FOR INDUCTIVELY CHARGING A BATTERY-OPERATED INDUSTRIAL TRUCK
SYSTÈME DE CHARGE POUR UN CHARIOT DE MANUTENTION FONCTIONNANT SUR BATTERIE AINSI QUE PROCÉDÉ DE CHARGE INDUCTIVE D'UN CHARIOT DE MANUTENTION FONCTIONNANT SUR BATTERIE

(30) Priorität: 16.05.2017 DE 102017110604
(43) Veröffentlichungstag der Anmeldung: 02.01.2019
(73) Patentinhaber: Jungheinrich Aktiengesellschaft, 22047 Hamburg (DE)
(72) Erfinder: Wetegrove, Ralf, 22850 Norderstedt (DE); Lippert, Markus, 25451 Quickborn (DE); Petersen, Marinus, 24536 Neumünster (DE)
(74) Vertreter: Hauck Patentanwaltspartnerschaft mbB

(56) Entgegenhaltungen:
- DE-A1-102009 013 695
- DE-A1-102013 004 180
- DE-A1-102016 219 476

## Beschreibung

Die vorliegende Erfindung betrifft ein Ladesystem für ein batteriebetriebenes Flurförderzeug, das mit einer fahrzeugfest montierten Ladeeinheit ausgestattet ist. Ebenfalls betrifft die Erfindung ein Verfahren zum induktiven Laden eines batteriebetriebenen Flurförderzeugs mit einer fahrzeugfesten Ladeeinheit.

Die drahtlose Energieübertragung und die kabellose Leistungsübertragung sind hinlänglich bekannt und werden beispielsweise zur Ladung von Akkumulatoren in Mobilgeräten eingesetzt. Bei der vorliegenden Erfindung wird nicht zwischen einer Energie- und einer Leistungsübertragung unterschieden. Das Prinzip der drahtlosen Energieübertragung im Nahfeld beruht auf einer induktiven oder kapazitiven Kopplung. Bei der induktiven Kopplung wird über eine Primärspule ein oszillierendes magnetisches Feld abgestrahlt, das von einer Sekundärspule empfangen wird. Über Gegeninduktion wird sekundärseitig ein Wechselstrom erzeugt, gerade so wie bei einem Transformator, jedoch ohne einen durchgehenden Transformatorkern zwischen Primär- und Sekundärspule. Bei der resonanten induktiven Kopplung sind Resonanzkreise für die Magnetfelder vorgesehen.

Eine induktive Kopplung von Elektrofahrzeugen ist bekannt. Ein von der Firma Audi entwickeltes Konzept zum schnellen Laden von bis zu 150 kW erfolgt über eine Bodenplatte, auf die das zu ladende Elektroauto fährt. Das Elektroauto besitzt auf seiner zum Boden weisenden Seite eine entsprechende Ladeeinheit, die oberhalb einer ersten Ladeeinheit in der Bodenplatte angeordnet ist. Über eine Funkverbindung ist die Bodenplatte mit einer Fahrzeugsteuerung des Autos verbunden, so dass bei Beginn des Ladeprozesses das Fahrzeug selbständig in eine für den Ladeprozess ideale Position über der Bodenplatte gefahren werden kann.

Nachteilig an dem bekannten Verfahren ist, dass aufgrund der fehlenden Sichtbarkeit der Bodenplatte für den Fahrer eine automatische Korrektur der anfänglichen Positionierung des Fahrzeugs erfolgen muss.

Aus US 2011/0121778 A1 ist ein elektrisches Ladesystem für ein Fahrzeug bekannt, bei dem zwischen drei Ladespulen ausgewählt werden kann.

Aus DE 10 2016 219 476 A1 ist eine induktive Ladeeinheit für ein Fahrzeug bekannt geworden. Die Ladeeinheit umfasst einen wannenförmigen Grundträger mit einer Grundfläche und die Grundfläche lateral umschließenden Seitenwänden. Ferner umfasst die Ladeeinheit eine Primärspule zur induktiven Kopplung mit einer dem Fahrzeug zugeordneten Sekundärspule. Es ist bekannt, die Ladeeinheit mit einer Ferritstruktur zu versehen, die einen Ringkörper und quer zum Ringkörper verlaufende Radialelemente aufweist.

Aus DE 10 2013 004 180 A1 ist ein induktives Energieübertragungssystem zur Übertragung von Energie zwischen einer primär- und einer sekundärseitigen Spulenanordnung vorgesehen. Die primärseitige Spulenanordnung weist vier Spulen auf, die unabhängig voneinander bestromt werden können. Eine Phasenlage der durch die Spulen fließenden Spulenströme bildet die magnetische Gesamtflussdichte. Durch die Anpassung der magnetischen Gesamtflussdichte kann eine möglichst hohe Leistungsdichte sowie eine Anpassung an verschiedene sekundärseitige Spulenanordnungen vorgenommen werden.

Aus DE 10 2009 013 695 A1 ist eine Vorrichtung für ein Energieübertragungssystem auf ein stehendes oder fahrendes Fahrzeug bekannt geworden. Eine primärseitig vorgesehene Vorrichtung besteht aus einem Netzwerk von sich kreuzenden Leitungen. Durch das Ansteuern der Ströme mit ihrer Phase in den jeweiligen Bereichen entsteht in den einen viereckigen Bereich begrenzenden Leitungen quasi ein Kreisstrom, der vergleichbar einer Spule ein Magnetfeld erzeugt.

Der Erfindung liegt die Aufgabe zugrunde, ein Ladesystem sowie ein Verfahren zum induktiven Laden zu schaffen, bei dem das abgestellte Fahrzeug möglichst optimal geladen wird.

Erfindungsgemäß wir die Aufgabe durch ein Ladesystem Anspruch 1 gelöst.Vorteilhafte Ausgestaltungen bilden die Gegenstände der Unteransprüche.

Das erfindungsgemäße Ladesystem ist vorgesehen und bestimmt für ein batteriebetriebenes Flurförderzeug. Das Ladesystem besitzt eine fahrzeugfest montierte und eine außerhalb des Fahrzeugs vorgesehene externe Ladeeinheit. Erste und zweite Ladeeinheit wirken induktiv zusammen, wobei eine Leistung aus der zweiten Ladeeinheit über die erste Ladeeinheit in die Batterie fließt. Grundsätzlich ist auch ein Entladen der Batterie über die zweite und erste Ladeeinheit möglich, falls dies für die Batterie erforderlich ist. Die zweite Ladeeinheit weist eine Ladespulensteuereinheit und mindestens zwei Primärspulen auf, die unabhängig voneinander zur induktiven Übertragung von Leistungen an die erste Ladeeinheit ansteuerbar sind. Jede der Primärspulen in der zweiten Ladeeinheit ist ausgelegt, um die für die Ladung der Batterie vorgesehene Leistung induktiv zu übertragen. Vor einer Leistungsübertragung überprüft die Ladespulensteuereinheit, welche von den Primärspulen einen besten Überlapp mit der ersten Ladeeinheit aufweist. Das erfindungsgemäße Ladesystem findet durch die Auswahl der zu verwendenden Spule die bestmögliche Übertragung zu dem Flurförderzeug, ohne dass das abgestellte Fahrzeug relativ zu der externen Ladeeinheit bewegt werden muss.

Bevorzugt sind die Primärspulen in einer außerhalb des Fahrzeugs extern vorgesehenen Ladeeinheit vorgesehen und die Sekundärspulen in der fahrzeugfest montierten ersten Ladeeinheit.

In einer bevorzugten Ausgestaltung ist die zweite Ladeeinheit mit einem überfahrfesten Gehäuse ausgestattet. Das überfahrfeste Gehäuse stellt sicher, dass die Spulen der zweiten Ladeeinheit sowie die Ladespulensteuereinrichtung bei einem Überfahren, beispielsweise mit einem Flurförderzeug, nicht beschädigt werden.

Bei dem erfindungsgemäßen Ladesystem sind die mindestens zwei Spulen der zweiten Ladeeinheit teilweise räumlich überlappend zueinander angeordnet. Die einander überlappenden Spulen weisen Ferritelemente auf, die als längliche Elemente sich in radialer Richtung der jeweiligen Spule erstrecken. Die bevorzugt stabförmigen Ferritelemente sind derart angeordnet, dass es zwei Spulen zugeordnet ist. Bevorzugt befindet sich jeweils ein Spulenmittelpunkt an einem Ende des Ferritelements. Die Ferritelemente dienen dazu, den magnetischen Fluss und damit den Wirkungsgrad des Ladevorgangs zu verbessern. Ein räumlicher Überlapp zwischen zwei Spulen besteht dann, wenn das von den Spulen umschlossene Raumgebiet bzw. dessen Grundflächen sich überlappen. Die einander überlappenden Primärspulen sind räumlich über- und untereinander in der zweiten Ladeeinheit angeordnet.

Für eine möglichst effiziente Leistungsübertragung zwischen der ersten und zweiten Ladeeinheit ist der Überlapp zwischen der die Leistung übertragenden Primärspule und der ersten Ladeeinheit ausschlaggebend. Zur Bestimmung des besten Überlapps, misst die Ladespulensteuereinheit die Induktivität der Primärspulen. Hierzu wird die Induktivität jeder Primärspule insbesondere einzeln gemessen. Aus den Werten für die größte induktive Kopplung zwischen jeweiliger Primärspule und erster Ladeeinheit wird der beste Überlapp bestimmt.

In einer bevorzugten Ausgestaltung ist die erste und Ladeeinheit mit Spulen und Ferritelementen zur induktiven Leistungsübertragung ausgestattet. Insbesondere die Ferritelemente verlaufen jeweils in radialer Richtung der ihnen zugeordneten Spule. Die Ferritelemente in der ersten und der zweiten Ladeeinheit bündeln insbesondere den magnetischen Fluss in den Ladeeinheiten und helfen so möglichst große magnetische Flussdichten für eine effiziente Leistungsübertragung zwischen den Ladeeinheiten aufzubauen.

Als besonders vorteilhaft hat sich herausgestellt, Ferritelemente, beispielsweise stabförmige Ferritelemente jeweils in radialer Richtung einer Spule anzuordnen. In einer bevorzugten Ausgestaltung ist jede der mindestens zwei Spulen jeweils in einer Ebene in der zweiten Ladeeinheit angeordnet. Die Anordnung der Spulen in der zweiten Ladeeinheit erfolgt im Wesentlichen parallel zueinander mit unterschiedlichen Höhen, wodurch die Ebenen in der zweiten Ladeeinheit definiert sind. Der magnetische Fluss durch die Ferritelemente kann dabei im Wesentlichen durch unterhalb der Spulen angeordnete Ferritelemente erfolgen. Es ist aber grundsätzlich auch möglich, Ferritelemente zwischen den Ebenen der Spulen anzuordnen.

In einer bevorzugten Ausgestaltung weisen die Spulen jeweils einen geometrischen Mittelpunkt auf, beispielsweise bei kreisförmigen Spulen den Kreismittelpunkt, wobei benachbarte geometrische Mittelpunkte jeweils einen vorbestimmten Abstand zueinander besitzen. Der vorbestimmte feste Abstand der geometrischen Mittelpunkte zueinander bildet ein regelmäßiges Netz. Eine solche gleichmäßige Anordnung definiert ein Raster, mit dem unterschiedliche Positionen für die induktive Übertragung zwischen den Ladeeinheiten bestimmt werden können. In einer bevorzugten Ausgestaltung bilden jeweils drei geometrische Mittelpunkte ein gleichschenkliges Dreieck.

Das mit dem erfindungsgemäßen Ladesystem ausgeführte Verfahren betrifft einen induktiven Ladevorgang eines batteriebetriebenen Flurförderzeugs mit einer fahrzeugfesten ersten Ladeeinheit und einer außerhalb des Flurförderzeugs vorgesehenen zweiten Ladeeinheit, die mindestens zwei unabhängig bestrombare Spulen aufweist. Bei dem Verfahren kommt es in einem Verfahrensschritt zu einem Messen des Überlapps für jede der Spulen aus der zweiten Ladeeinheit mit der Ladeeinheit. Aus dem gemessenen Überlapp wird eine Spule ausgewählt, die den größten Überlapp mit der ersten Ladeeinheit besitzt. Gemäß dem Verfahren wird die ausgewählte Spule zur induktiven Leistungsübertragung an die erste Ladeeinheit angesteuert. Durch die Auswahl aus mehreren Spulen wird sichergestellt, dass der Ladevorgang mit der Spule erfolgt, die die beste magnetische Kopplung zu der ersten Ladeeinheit besitzt.

Bei dem Verfahren wird bevorzugt die Messung des Überlapps durch eine Messung der Induktivität der jeweiligen Spule durchgeführt. Die

Induktivität ist ein Maß für die magnetische Kopplung zwischen den beiden Ladeeinheiten und damit ein Maß für die Effizienz bei der Übertragung der Ladeeinheiten.

Die Erfindung wird bevorzugt an einem nachfolgenden Ausführungsbeispiel erläutert. Es zeigen:
- Fig. 1: eine schematische Ansicht von drei Primärspulen mit Ferritelementen,
- Fig. 2: ein herkömmliches induktives Ladesystem mit jeweils einer Spule in einer Ladeeinheit,
- Fig. 3: ein erfindungsgemäßes Ladesystem mit einer Vielzahl von Primärspulen in der zweiten Ladeeinheit bei einer durchgehenden Ferritstange, und
- Fig. 4: eine Schnittdarstellung des erfindungsgemäßen Ladesystems entlang der Linie A aus Fig. 1.

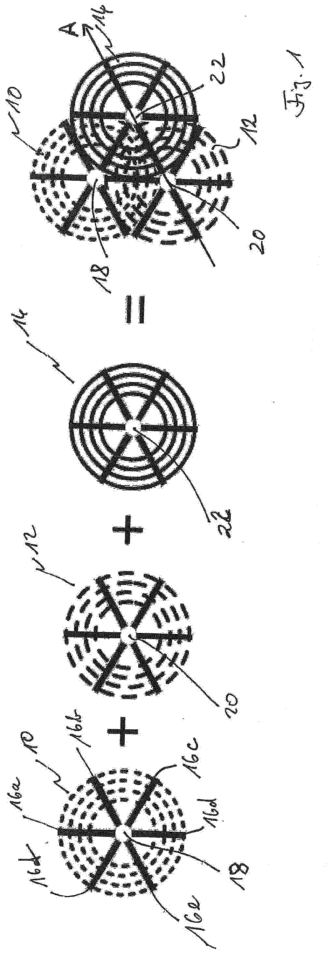

Fig. 1 zeigt drei Primärspulen 10, 12, 14, die schematisch als Ringe mit gepunktete, gestrichelten und durchgezogenen Linien dargestellt ist. Jede der Primärspulen 10, 12, 14 besitzt sechs stabförmige Ferritelemente 16a, 16b, 16c, 16d, 16e und 16f. Die Ferritelemente sind in radialer Richtung unter gleichem Winkelabstand in den Primärspulen angeordnet. Die Primärspulen 10, 12, 14 können einander überlappend angeordnet werden. Hierbei werden einige Ferritelemente der überlappenden Primärspulen gemeinsam genutzt, so dass die geometrischen Spulenmittelpunkte 18, 20, 22 ein gleichschenkliges Dreieck zueinander bilden. Die in Fig. 1 dargestellte Anordnung ist dabei so, dass die geometrischen Mittelpunkte 18 und 22 entlang dem Ferritelemente 16c liegen und die geometrischen Mittelpunkte 18 und 20 an den Enden des Ferritelements 16d liegen. Selbstverständlich können, je nach Ausgestaltung des geometrischen Flusses, die Ferritelemente auch durchgehend ausgebaut sein. In jeder der drei Lagen von Spulen sind die (runden) Spulen derart angeordnet, dass jede Spule von sechs weiteren Spulen umgeben ist. Lediglich am Rande des Feldes können weniger als sechs Spulen eine vorgegebene Spule umgeben. Die Spulen sind dabei in einer Art dichtester Packung in der Ebene angeordnet, wobei die drei Lagen zueinander versetzt, also übereinander angeordnet sind, wobei die Verbindungslinien der Mittelpunkt von jeweils drei einander überlappenden Spulen ein gleichseitiges Dreieck bilden.

Der Aufbau ist keineswegs auf drei Lagen beschränkt, auch zwei Lagen oder mehr als drei Lagen sind möglich. In der Ausgestaltung mit drei Lagen befinden sich die Ferritstäbe, welche die Mittelpunkte voneinander überlappenden Spulen miteinander verbinden, in einer gemeinsamen Lage. Dies kann die unterste Lage sein oder auch zwischen den Spulen.

Jeder Ferritstab kann von jeweils einer der beiden Spulen der drei Lagen erregt werden, wenn der Ferritstab radial zu der entsprechenden Spule verläuft. Bei der in Fig. 1 dargestellten regelmäßigen Anordnung verläuft ein Ferritstab stets radial zu zwei Spulen, während er tangential zu einer dritten Spule verläuft, durch die keine Erregung des Ferritstabes erfolgt.

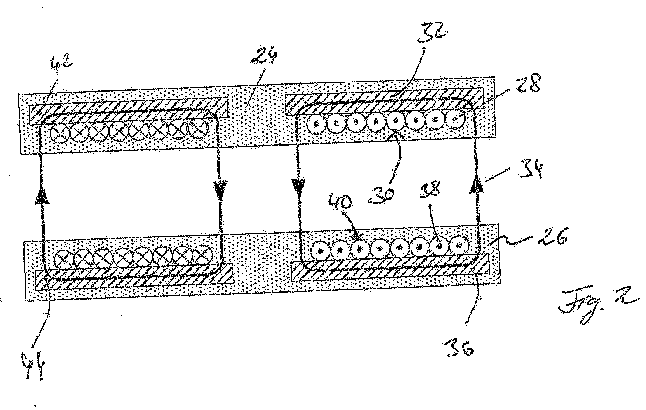

Fig. 2 zeigt in einer schematischen Schnittansicht das Zusammenwirken einer ersten Ladeeinheit 24 und einer zweiten Ladeeinheit 26. Für die erste Ladeeinheit 24, die beispielsweise fahrzeugfest verbaut sein kann, ist eine Spule mit symbolisch dargestellter Stromflussrichtung 28 dargestellt. Die Spule 28 ist in einer Ebene angeordnet, wobei in dem Teil 30 der Spule, in dem der Betrachtungsebene heraustritt, ein Ferritelement 32 vorgesehen ist. Über das Ferritelement 32 wird ein geschlossenes Magnetfeld 34 mit einem weiteren Ferritelement 36 in der zweiten Ladeeinheit 26 gebildet. Die zweite Ladeeinheit 26 besitzt ebenfalls eine Spule 38, die in einer Ebene und parallel zur Spule 28 angeordnet ist. Über das Magnetfeld 34 werden hierbei die Spulenteile 30 und 40 über die Ferritelemente 32 und 36 gekoppelt. Über die Ferritelemente 42 und 44 ist der Aufbau des Magnetfelds 46 für den Teil der Spulen 28 und 38 mit in die Betrachtungsebene tretender Stromrichtung identisch.

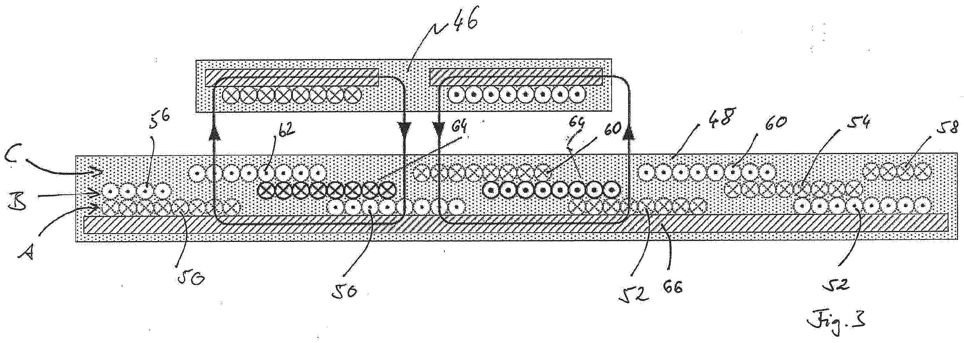

Fig. 3 zeigt das erfindungsgemäße Ladesystem mit einer fahrzeugfest montierten ersten Ladeeinheit 46. Die extern vorgesehene zweite Ladeeinheit 48 ist ebenfalls wie die erste Ladeeinheit 46 im Schnitt dargestellt. Für die zweite Ladeeinheit 48 sind eine Vielzahl von Spulen 52 bis 62 zu erkennen. In einer Ebene A liegen Spulen 50 und 52. Die in der zweiten Ebene B liegenden Spulen 54 und 56 sind nicht vollständig dargestellt, ebenso die Spulen 58 und 62 in der dritten Ebene C. Deutlich zu erkennen ist, dass die Spule 64 den größten Überlapp mit der ersten Ladeeinheit 46 besitzt. Erfindungsgemäß ist daher vorgesehen, dass die Magnetfelder zur induktiven Leistungsübertragung von der Spule 62 erzeugt werden. Die Wirkung der Spulen 64 wird durch das Ferritelement 66 in der zweiten Ladeeinheit 48 unterstützt.

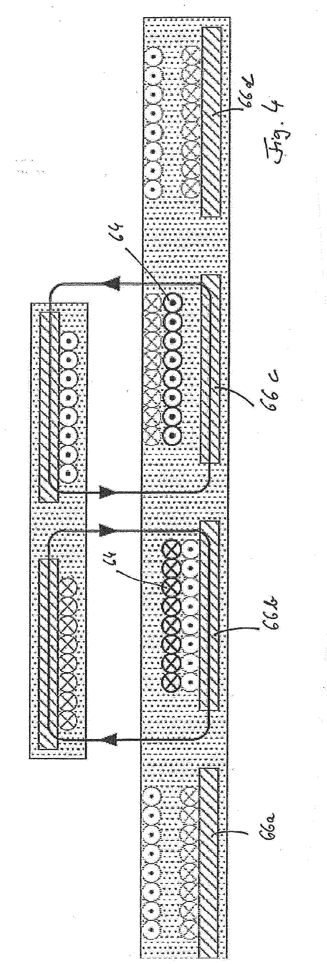

In Fig. 4 sind mehrere einzelne Ferritelemente 66a, 66b, 66c, 66d dargestellt. Deutlich zu erkennen ist, dass jedes der Ferritelemente 66a bis 66d in radialer Richtung zu zwei der drei Spulenpaare verläuft. Die magnetische Wirkung der aktiven Primärspule 64 wird beispielsweise durch die Ferritstäbe 66b und 66c unterstützt.

In der zweiten Ladeeinheit 48, die beispielsweise als eine Bodenplatte ausgebildet sein kann, sind mehrere versetzte Spulenlagen aus Hochfrequenzlitze angeordnet.

Die Anordnung ist dabei so gewählt, dass bei jeder Positionierung des Fahrzeugs und der ersten Ladeeinheit 46 eine hohe magnetische Kopplung durch die Auswahl der Spule mit dem besten Überlapp gewählt ist. In dem in Fig. 3 dargestellten Ausführungsbeispiel sind drei Spulenlagen A, B, C dargestellt.

Die zweite Ladeeinheit 48 detektiert die Position der ersten Ladeeinheit 46, in dem die magnetische Kopplung der Primärspulen mit der Spule der ersten Ladeeinheit 46 durch Messung der Induktivität geprüft wird. Auf Basis der Werte der magnetischen Kopplung kann die für die Ladungsübertragung zu bestromende Primärspule 64 angesteuert werden.

### Bezugszeichenliste

- 10: Primärspule
- 12: Primärspule
- 14: Primärspule
- 16a-f: Ferritelemente
- 18: Spulenmittelpunkt
- 20: Spulenmittelpunkt
- 22: Spulenmittelpunkt
- 24: erste Ladeeinheit
- 26: zweite Ladeeinheit
- 28: Spule
- 30: Teil der Spule
- 32: Ferritelement
- 34: Magnetfeld
- 36: Ferritelement
- 38: Spule
- 40: Teil der Spule
- 42: Ferritelement
- 44: Ferritelement
- 46: erste Ladeeinheit
- 48: zweite Ladeeinheit
- 50: Spule
- 52: Spule
- 54: Spule
- 56: Spule
- 58: Spule
- 60: Spule
- 62: Spule
- 64: Spule
- 66: Ferritelement

## Patentansprüche

1. Ladesystem für ein batteriebetriebenes Flurförderzeug, das mit einer ersten Ladeeinheit (46) ausgestattet ist, die mit einer zweiten Ladeeinheit (48) induktiv zusammenwirkt, um eine in dem Flurförderzeug vorgesehene Batterie zu laden, wobei
- die zweite Ladeeinheit (48) eine Ladespulensteuereinheit und mindestens zwei Spulen (50 bis 64) aufweist, die unabhängig voneinander zur induktiven Übertragung von Leistung an die erste Ladeeinheit (46) ansteuerbar sind,
- und die Ladespulensteuereinheit vor einer Leistungsübertragung überprüft, welche der mindestens zwei Spulen (50 bis 64) der zweiten Ladeeinheit (48) einen besten Überlapp mit der ersten Ladeeinheit (46) aufweist und die Leistungsübertragung über die Spule (50 bis 64) mit dem besten Überlapp auslöst,
**dadurch gekennzeichnet, dass**
- die mindestens zwei Spulen der zweiten Ladeeinheit teilweise überlappend angeordnet sind und Ferritelemente aufweisen, wobei mindestens ein Paar von Spulen gemeinsam ein in radialer Richtung angeordnetes Ferritelement nutzt.

2. Ladesystem nach Anspruch 1, **dadurch gekennzeichnet, dass** die erste Ladeeinheit (46) fahrzeugfest montiert und die zweite Ladeeinheit (48) außerhalb des Fahrzeugs extern vorgesehen ist.

3. Ladesystem nach Anspruch 1 oder 2, **dadurch gekennzeichnet, dass** die zweite Ladeeinheit ein überfahrfestes Gehäuse aufweist.

4. Ladesystem nach einem der Ansprüche 1 bis 3, **dadurch gekennzeichnet, dass** die Ladespulensteuereinheit durch eine Messung der Induktivität bestimmt, welche der mindestens zwei Spulen den besten Überlapp mit der ersten Ladeeinheit besitzt.

5. Ladesystem nach einem der Ansprüche 1 bis 4, **dadurch gekennzeichnet, dass** die erste Ladeeinheit Spulen und Ferritelemente zur induktiven Leistungsübertragung aufweist.

6. Ladesystem nach einem der Ansprüche 1 bis 5, **dadurch gekennzeichnet, dass** jede der mindestens zwei Spulen jeweils in einer Ebene in der zweiten Ladeeinheit angeordnet sind.

7. Ladesystem nach Anspruch 6 **dadurch gekennzeichnet, dass** die Ebenen der Spulen parallel zueinander angeordnet sind.

8. Ladesystem nach einem der Ansprüche 1 bis 7, **dadurch gekennzeichnet, dass** die Spulen jeweils einen geometrischen Mittelpunkt aufweisen, wobei benachbarte geometrische Mittelpunkte jeweils einen vorbestimmten Abstand zueinander besitzen.

9. Ladesystem nach Anspruch 8, **dadurch gekennzeichnet, dass** jeweils drei geometrische Mittelpunkte ein gleichschenkliges Dreieck bilden.

10. Ladesystem nach Anspruch 1 bis 9, **dadurch gekennzeichnet, dass** die Ferritelemente stabförmig ausgebildet sind.

## Claims

1. A charging system for a battery-operated industrial truck, which is equipped with a first charging unit (46) that works together inductively with a second charging unit (48) to charge a battery provided in the industrial truck, wherein
- the second charging unit (48) has a charging coil control unit and at least two coils (50 to 64) which can be activated independently of each other to inductively transmit power to the first charging unit (46),
- and, before transmitting power, the charging coil control unit checks which of the at least two coils (50 to 64) of the second charging unit (48) has a best overlap with the first charging unit (46) and triggers the power transmission via the coil (50 to 64) with the best overlap,
**characterized in that**
- the at least two coils of the second charging unit are arranged partially overlapping and have ferrite elements, wherein at least one pair of coils together uses a ferrite element arranged in the radial direction.

2. The charging system according to claim 1, **characterized in that** the first charging unit (46) is firmly mounted to the vehicle and the second charging unit (48) is provided externally outside the vehicle.

3. The charging system according to claim 1 or 2, **characterized in that** the second charging unit has a housing that can withstand being run over.

4. The charging system according to one of claims 1 to 3, **characterized in that** the charging coil control unit determines, through a measurement of the inductance, which of the at least two coils has the best overlap with the first charging unit.

5. The charging system according to one of claims 1 to 4, **characterized in that** the first charging unit has coils and ferrite elements for inductive power transmission.

6. The charging system according to one of claims 1 to 5, **characterized in that** each of the at least two coils is each arranged in a plane in the second charging unit.

7. The charging system according to claim 6 **characterized in that** the planes of the coils are arranged parallel to each other.

8. The charging system according to one of claims 1 to 7, **characterized in that** the coils each have a geometric center point, wherein neighboring geometric center points each have a predetermined distance from each other.

9. The charging system according to claim 8, **characterized in that** each three geometric center points form an isosceles triangle.

10. The charging system according to claims 1 to 9, **characterized in that** the ferrite elements are rod-shaped.

## Revendications

1. Système de charge pour un chariot de manutention fonctionnant sur batterie, qui est équipé d'une première unité de charge (46), qui interagit avec une seconde unité de charge (48) par induction pour charger une batterie prévue dans le chariot de manutention, dans lequel
- la seconde unité de charge (48) présente une unité de commande de bobine de charge et au moins deux bobines (50 à 64), qui sont activables indépendamment l'une de l'autre par transmission inductive de puissance à la première unité de charge (46),
- et l'unité de commande de bobine de charge vérifie avant une transmission de puissance, laquelle des deux bobines au moins (50 à 64) de la seconde unité de charge (48) présente un meilleur chevauchement avec la première unité de charge (46), et déclenche la transmission de puissance par le biais de la bobine (50 à 64) présentant le meilleur chevauchement,
**caractérisé en ce que**
- les deux bobines au moins de la seconde unité de charge sont disposées en partie de manière à se chevaucher et présentent des éléments en ferrite, dans lequel au moins une paire de bobines utilise en commun un élément en ferrite disposé en direction radiale.

2. Système de charge selon la revendication 1, **caractérisé en ce que** la première unité de charge (46) est montée fixement sur le véhicule et la seconde unité de charge (48) est prévue en externe en dehors du véhicule.

3. Système de charge selon la revendication 1 ou 2, **caractérisé en ce que** la seconde unité de charge présente un boîtier résistant au passage d'un véhicule.

4. Système de charge selon l'une des revendications 1 à 3, **caractérisé en ce que** l'unité de commande de bobine de charge détermine par une mesure de l'inductance, laquelle des deux bobines au moins possède le meilleur chevauchement avec la première unité de charge.

5. Système de charge selon l'une des revendications 1 à 4, **caractérisé en ce que** la première unité de charge présente des bobines et des éléments en ferrite servant à la transmission inductive de puissance.

6. Système de charge selon l'une des revendications 1 à 5, **caractérisé en ce que** chacune des deux bobines au moins est disposée respectivement dans un plan à l'intérieur de la seconde unité de charge.

7. Système de charge selon la revendication 6, **caractérisé en ce que** les plans des bobines sont disposés parallèlement l'un à l'autre.

8. Système de charge selon l'une des revendications 1 à 7, **caractérisé en ce que** les bobines présentent respectivement un centre géométrique, dans lequel des centres géométriques adjacents possèdent respectivement une distance prédéterminée les uns par rapport aux autres.

9. Système de charge selon la revendication 8, **caractérisé en ce que** respectivement trois centres géométriques forment un triangle isocèle.

10. Système de charge selon la revendication 1 à 9, **caractérisé en ce que** les éléments en ferrite sont conçus sous la forme de tiges.
